(19) Europäisches Patentamt / European Patent Office / Office européen des brevets

(11) **EP 3 964 763 B1**

(12) **FASCICULE DE BREVET EUROPEEN**

(45) Date de publication et mention de la délivrance du brevet:
**25.02.2026 Bulletin 2026/09**

(21) Numéro de dépôt: **21194225.5**

(22) Date de dépôt: **01.09.2021**

(51) Classification Internationale des Brevets (IPC):
**F24F 12/00** *(2006.01)*     **F24F 11/41** *(2018.01)*
**F24F 110/10** *(2018.01)*     **F24F 110/12** *(2018.01)*

(52) Classification Coopérative des Brevets (CPC):
**F24F 12/006; F24F 11/41;** F24F 2110/10;
F24F 2110/12; F24F 2221/34; Y02B 30/56

(54) **ECHANGEUR THERMIQUE AMELIORE POUR VENTILATION DOUBLE FLUX**

VERBESSERTER WÄRMETAUSCHER FÜR DOPPELSTROM-LÜFTUNGSANLAGE

IMPROVED HEAT EXCHANGER FOR DUAL-FLOW VENTILATION SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.09.2020 FR 2009015**

(43) Date de publication de la demande:
**09.03.2022 Bulletin 2022/10**

(73) Titulaire: **Aereco**
**77615 Marne la Vallée Cedex 03 (FR)**

(72) Inventeurs:
• STOICHITA, Catalin
**77615 MARNE LA VALLEE CEDEX 3 (FR)**
• DUPONT, Christophe
**77615 MARNE LA VALLEE CEDEX 3 (FR)**

(74) Mandataire: **Germain Maureau**
**12, rue Boileau**
**69006 Lyon (FR)**

(56) Documents cités:
EP-A1- 1 445 549     EP-A1- 3 205 948
EP-A2- 2 444 755     WO-A1-2018/182479
GB-A- 2 559 692     US-A1- 2007 169 927

**Description**

L'invention concerne le domaine des échangeurs thermiques double flux, et plus particulièrement des échangeurs thermiques double flux pour ventilations doubles flux.

Un échangeur thermique est un dispositif permettant de transférer de l'énergie thermique d'un fluide vers un autre sans les mélanger. Les fluides circulent dans des conduits séparés par une surface d'échange à travers laquelle le transfert d'énergie thermique a lieu. Dans le cadre d'une ventilation double flux, les fluides sont par exemple de l'air intérieur d'une pièce et de l'air extérieur à la pièce. Une ventilation double flux permet de renouveler l'air intérieur d'une pièce, en injectant de l'air extérieur (dit air entrant) et en expulsant de l'air intérieur (dit air sortant). Les flux d'air entrant et d'air sortant passent dans l'échangeur thermique qui permet de récupérer la chaleur de l'air le plus chaud pour la transférer à l'air le plus froid. Dans le cas où l'air intérieur est plus chaud que l'air extérieur, l'échangeur thermique permet de récupérer la chaleur de l'air sortant pour la transférer à l'air entrant avant son injection dans la pièce à ventiler. En revanche, dans le cas où l'air intérieur est plus froid que l'air extérieur, l'échangeur thermique permet de transférer de la chaleur de l'air entrant à l'air sortant, avant injection de l'air entrant dans la pièce à ventiler.

Dans la suite de la description, on s'intéressera plus particulièrement aux cas où l'air intérieur est plus chaud que l'air extérieur. Dans de tels échangeurs thermiques, l'air chaud est humide et peut condenser en se refroidissant au contact de l'air froid. Les condensats risquent alors de se transformer en givre ou en glace si la température de l'air froid est très faible. Ce givre ou cette glace peuvent obturer au moins en partie le conduit d'air chaud de l'échangeur, ce qui rend l'échangeur moins efficace, voire inopérant. La ventilation double flux ne peut alors plus assurer son rôle.

Une solution connue consiste à utiliser un préchauffeur, tel qu'un préchauffeur électrique ou à eau chaude, afin de préchauffer l'air froid entrant dans l'échangeur en amont de la surface d'échange, à une température prédéterminée, dans le but de ne pas engendrer de création de givre ou glace. Jusqu'à présent, il est couramment admis de préchauffer l'air froid à une température prédéterminée supérieure ou égale à -5°C. De cette façon, la température de l'air froid n'est pas suffisamment faible pour geler les condensats. Cependant cette consigne en température fixe sur le flux d'air froid entrant ne fonctionne pas toujours. En effet, si le flux d'air chaud est fortement chargé en humidité (par exemple s'il provient d'une cuisine), la condensation sera importante et le risque d'apparition de givre ou glace au contact du flux d'air froid sera élevé. Par ailleurs, si la température de l'air chaud est inférieure à 20°C (c'est-à-dire par exemple si l'échangeur est disposé dans une zone non chauffée telle que les combles d'une habitation), alors la température prédéterminée de l'air froid préchauffé ne permet pas d'éviter l'apparition de givre ou glace. En outre, plus l'échangeur est performant (efficacité supérieure à 80% par exemple), plus il sera sensible aux risques de givrage, et cette température prédéterminée ne sera pas adaptée pour empêcher la formation de givre ou glace. L'efficacité d'un échangeur thermique dépend notamment des débits de flux qui le traversent, des équilibrages massiques réalisés, et de l'étanchéité de l'échangeur.

Une solution pourrait consister à remonter la température prédéterminée de l'air froid préchauffé, mais ceci a un coup énergique lourd. En effet, chaque degré relevé par effet joule au niveau du préchauffeur est un degré qui ne sera pas restitué gratuitement par l'échangeur, à hauteur de son rendement.

Des exemples d'échangeurs de chaleur pour des systèmes de ventilation à double flux sont connus de EP 2 444 755 A2 et GB 2 559 692 A.

L'invention a pour but de remédier à tout ou partie des inconvénients précités en proposant, un échangeur thermique entre un flux d'air froid et un flux d'air chaud pour ventilation double flux, l'échangeur thermique comprenant :

- une surface d'échange de chaleur entre le flux d'air froid et le flux d'air chaud,
- une entrée d'air froid par laquelle entre le flux d'air froid, en amont de la surface d'échange de chaleur,
- une sortie d'air froid par laquelle sort le flux d'air froid, en aval de la surface d'échange de chaleur,
- une entrée d'air chaud par laquelle entre le flux d'air chaud, en amont de la surface d'échange de chaleur,
- une sortie d'air chaud par laquelle sort le flux d'air chaud, en aval de la surface d'échange de chaleur,
- un préchauffeur disposé au niveau du flux d'air froid, en amont de la surface d'échange de chaleur,
- un capteur de température d'air chaud sortant en aval de la surface d'échange de chaleur, et
- un capteur de température d'air froid préchauffé en amont de la surface d'échange de chaleur,

le préchauffeur étant configuré pour préchauffer le flux d'air froid en fonction d'une moyenne entre la température d'air froid préchauffé et la température d'air chaud sortant.

Ainsi, le préchauffage est piloté par rapport à la moyenne des températures froides de l'échangeur thermique. Le préchauffage est alors adapté notamment selon le positionnement de l'échangeur (zone chauffée ou non) et selon les performances de l'échangeur qui varient selon les débits des flux d'air entrant et sortant. En outre, le préchauffage est régulé en temps réel de sorte à réduire le préchauffage au minimum quel que soit le niveau d'efficacité ponctuel de l'échangeur, et quelque soient les conditions de température de l'air froid entrant et de l'air chaud entrant dans l'échangeur.

Selon d'autres caractéristiques de l'invention, l'échangeur de l'invention comporte l'une ou plusieurs des caractéristiques optionnelles suivantes, considérées seules ou selon toutes les combinaisons possibles.

Selon une caractéristique, le préchauffeur est configuré pour préchauffer le flux d'air froid de sorte que la moyenne entre la température d'air froid préchauffé et la température d'air chaud sortant soit supérieure ou égale à 0°C.

En effet, on considère que la température de la surface d'échange est égale à la moyenne des températures des deux flux. Si cette moyenne est supérieure à 0°C, il ne peut pas se former de givre ou de glace dans l'échangeur thermique. Le préchauffage est régulé en temps réel de sorte à réduire le préchauffage au minimum quel que soit le niveau d'efficacité ponctuel de l'échangeur, et quelque soient les conditions de température de l'air froid entrant et de l'air chaud entrant dans l'échangeur.

Selon une autre caractéristique, le préchauffeur est configuré pour préchauffer le flux d'air froid de sorte que la moyenne entre la température d'air froid préchauffé et la température d'air chaud sortant soit supérieure ou égale à 1°C et de préférence supérieure ou égale à 2°C. Cela permet de tenir compte de la précision des mesures de température, et de l'homogénéité des températures d'air froid préchauffé et air chaud sortant.

Selon une caractéristique, l'échangeur thermique est un échangeur à plaques.

L'invention a également pour but d'améliorer l'efficacité énergétique de l'échangeur thermique.

A cet effet, l'échangeur thermique présente un rendement correspondant à une valeur nominale en fonctionnement normal, et comprend un capteur de température d'air chaud entrant en amont de la surface d'échange de chaleur et/ou un capteur de température d'air froid sortant en aval de la surface d'échange de chaleur, permettant de calculer le rendement en temps réel, le préchauffeur étant configuré pour préchauffer le flux d'air froid de sorte que la moyenne entre la température d'air froid préchauffé et la température d'air chaud sortant soit inférieure ou égale à 0°C, et le rendement en temps réel soit égal à la valeur nominale.

Le rendement de l'échangeur correspond à :

$$\mu = (Teav - Tsav) / (Teav - Tean)$$

ou

$$\mu = (Tsan - Tean) / (Teav - Tean)$$

avec :

- $\mu$ le rendement,
- Teav la température d'air chaud entrant en amont de la surface d'échange,
- Tsav la température d'air chaud sortant en aval de la surface d'échange,
- Tean la température d'air froid préchauffé en amont de la surface d'échange,
- Tsan la température d'air froid sortant en aval de la surface d'échange.

Par fonctionnement normal, on entend un fonctionnement sans givre.

En effet, le rendement d'un échangeur présente une valeur inférieure à la valeur nominale lors de la formation de givre.

Ainsi le préchauffeur est piloté en temps réel, ce qui permet d'optimiser la puissance de chauffe et donc d'économiser de l'énergie. Le préchauffage est réalisé avec un risque d'amorce de givrage, mais la surveillance du rendement permet de détecter immédiatement toute amorce de givrage et de réagir en conséquence sur le préchauffage. On parle d'auto-apprentissage.

En calculant le rendement selon la formule $\mu =$ (Teav - Tsav) / (Teav - Tean), on parle de rendement à l'extraction, et en calculant le rendement selon la formule $\mu =$ (Tsan - Tean) / (Teav - Tean), on parle de rendement au soufflage.

De manière générale, le rendement à l'extraction est égal au rendement au soufflage.

Plus précisément, si le rendement est égal à la valeur nominale, alors le préchauffeur est configuré pour préchauffer le flux d'air froid de sorte que la moyenne entre la température d'air froid préchauffé et la température d'air chaud sortant soit inférieure ou égale à 0°C ; et si le rendement est inférieur à la valeur nominale alors le préchauffeur engage un cycle de surchauffe jusqu'à ce que le rendement retrouve sa valeur nominale.

Ainsi la puissance de chauffe est réduite au minimum et des cycles de surchauffe permettant le dégivrage sont amorcés si nécessaire. En effet, la température d'air froid préchauffé étant inférieure à la température d'air chaud sortant, du givre peut être créé dans certains cas lorsque la température d'air chaud sortant en aval de la surface d'échange est supérieure ou égale à 0°C. Lorsque le rendement chute, cela signifie que du givre s'est formé. En engageant un cycle de surchauffe, on permet alors le dégivrage.

Plus précisément, le préchauffeur est configuré pour préchauffer le flux d'air froid de sorte que la moyenne entre la température d'air froid préchauffé et la température d'air chaud sortant soit diminuée progressivement.

Cette caractéristique permet au préchauffeur de fonctionner avec une puissance minimum de façon à faire des économies d'énergie.

L'invention concerne en outre un procédé de mise en œuvre d'un échangeur thermique tel que décrit précédemment, comprenant les étapes suivantes :

- Calcul de la moyenne entre la température d'air froid préchauffé et la température d'air chaud sortant,
- Pilotage du préchauffeur en fonction de la moyenne calculée lors de l'étape précédente.

Selon une caractéristique, le procédé comprend en outre l'étape suivante :

- Calcul du rendement en temps réel.

D'autres caractéristiques et avantages de la présente invention apparaitront à la lecture de la description qui va suivre et à l'examen des figures annexées dans lesquelles :

[Fig. 1] est une vue schématique d'un échangeur thermique selon un premier mode de réalisation de l'invention,
[Fig. 2] est une vue schématique d'un échangeur thermique selon un deuxième mode de réalisation de l'invention,
[Fig. 3] est une vue schématique d'un échangeur thermique selon une variante du deuxième mode de réalisation,
[Fig. 4] est un diagramme présentant un suivi en temps réel de rendement de l'échangeur thermique des figures 2 et 3.

Dans la description qui va suivre et dans les revendications, des composants identiques, similaires ou analogues seront désignés par les mêmes chiffres de référence et on emploiera les termes « amont », « aval » par rapport aux sens de circulation des flux.

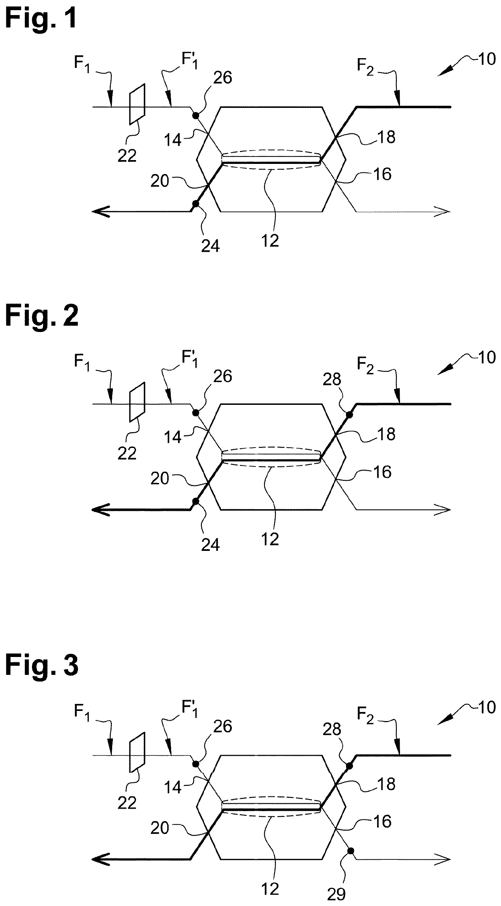

On se rapporte à la figure 1, sur laquelle on peut voir un échangeur thermique 10 selon un premier mode de réalisation, entre un flux d'air froid F1 et un flux d'air chaud F2. L'échangeur thermique 10 est adapté pour une ventilation double flux (non représentée). Il comprend une surface d'échange 12 de chaleur entre le flux d'air froid F1 et le flux d'air chaud F2.

Plus particulièrement, l'échangeur thermique 10 comprend :

- une entrée d'air froid 14 par laquelle entre le flux d'air froid F1, en amont de la surface d'échange 12 de chaleur, et
- une sortie d'air froid 16 par laquelle sort le flux d'air froid F1, en aval de la surface d'échange 12 de chaleur.

L'échangeur thermique 10 comprend en outre :

- une entrée d'air chaud 18 par laquelle entre le flux d'air chaud F2, en amont de la surface d'échange 12 de chaleur, et
- une sortie d'air chaud 20 par laquelle sort le flux d'air chaud F2, en aval de la surface d'échange 12 de chaleur.

Par ailleurs, l'échangeur thermique 10 comprend un préchauffeur 22 disposé au niveau du flux d'air froid F1, en amont de la surface d'échange 12. Le préchauffeur est configuré pour préchauffer le flux d'air froid F1, de sorte à obtenir un flux d'air froid préchauffé F1' en amont de la surface d'échange 12 et en aval du préchauffeur 22.

De plus, l'échangeur thermique 10 comprend un capteur 24 de température d'air chaud sortant, disposé en sortie d'air chaud 20. Le capteur 24 de température d'air chaud sortant est disposé en aval de la surface d'échange 12, au niveau du flux d'air chaud F2.

L'échangeur thermique 10 comprend également un capteur 26 de température d'air froid préchauffé, disposé au niveau du flux d'air froid préchauffé F1'. Le capteur 26 de température d'air froid préchauffé est disposé en aval du préchauffeur 22 et en amont de la surface d'échange 12.

Dans l'art antérieur, les préchauffeurs généralement utilisés sont configurés pour préchauffer le flux d'air froid à une température prédéterminée égale à -5°C.

Ainsi, dans un premier exemple de l'art antérieur, avec un flux d'air chaud présentant une température d'air chaud entrant dans l'échangeur de 20°C, et un échangeur présentant un rendement à l'extraction $\mu_{exhaust}$, et/ou un rendement au soufflage $\mu_{supply}$, présentant une valeur nominale N de 93% en fonctionnement normal (sans givre), alors la température du flux d'air chaud sortant serait de -3,25°C.

En effet, le rendement à l'extraction et le rendement au soufflage se calculent selon les formules suivantes :

$$\mu_{exhaust} = (Teav - Tsav) / (Teav - Tean)$$

$$\mu_{supply} = (Tsan - Tean) / (Teav - Tean)$$

avec :

- $\mu_{exhaust}$ le rendement à l'extraction,
- $\mu_{supply}$ le rendement au soufflage,
- Teav la température d'air chaud entrant en amont de la surface d'échange,
- Tsav la température d'air chaud sortant en aval de la surface d'échange,
- Tean la température d'air froid préchauffé en amont de la surface d'échange,
- Tsan la température d'air froid sortant en aval de la surface d'échange.

La température prédéterminée de -5°C n'est donc pas adaptée pour empêcher la formation de givre ou glace dans un échangeur de l'art antérieur présentant un tel rendement en fonctionnement normal et dans lequel le flux d'air chaud entrant présente une température de 20°C.

En outre, dans un deuxième exemple de l'art antérieur, avec un flux d'air chaud présentant une température d'air chaud entrant dans l'échangeur de 15 °C, et un échangeur présentant un rendement $\mu$ présentant une valeur nominale N de 80% en fonctionnement normal (sans givre), alors la température du flux d'air chaud sortant serait de -1°C.

La température prédéterminée de -5°C n'est donc pas adaptée pour empêcher la formation de givre ou glace dans un échangeur de l'art antérieur présentant un tel rendement en fonctionnement normal et dans lequel le flux d'air chaud entrant présente une température de 15°C.

Dans la présente invention, le préchauffeur 22 est configuré pour préchauffer le flux d'air froid F1 en fonction d'une moyenne M entre une température d'air chaud sortant, donnée par le capteur 24 de température d'air chaud sortant, et une température d'air froid préchauffé, donnée par le capteur 26 de température d'air froid préchauffé.

Un microcontrôleur (non représenté) permet de préchauffer le flux d'air froid F1 en fonction de la moyenne entre la température d'air chaud sortant et la température d'air froid préchauffé.

Plus précisément, dans le premier mode de réalisation de l'invention, le préchauffeur 22 peut être configuré pour préchauffer le flux d'air froid F1 de sorte que la moyenne M entre la température d'air froid préchauffé, donnée par le capteur 26 de température d'air froid préchauffé, et la température d'air chaud sortant, donnée par le capteur 24 de température d'air chaud sortant, soit supérieure ou égale à 0°C.

La moyenne est déterminée selon le calcul suivant :

$$M = (Tean + Tsav) / 2$$

En reprenant le premier exemple de l'art antérieur mais avec un échangeur selon le premier mode de réalisation de l'invention, pour un flux d'air chaud présentant une température d'air chaud entrant dans l'échangeur de 20°C, et un échangeur présentant un rendement présentant une valeur nominale N de 93% en fonctionnement normal (sans givre), si la moyenne M entre la température d'air froid préchauffé et la température d'air chaud sortant est fixée à 0,025°C, alors il est nécessaire de préchauffer le flux d'air froid entrant à une température de -0,7°C, et la température du flux d'air chaud sortant serait de 0,75°C.

Selon cet exemple, il n'y a donc pas de risque de givrage.

En reprenant le deuxième exemple de l'art antérieur mais avec un échangeur selon le premier mode de réalisation de l'invention, pour un flux d'air chaud présentant une température d'air chaud entrant dans l'échangeur de 15 °C, et un échangeur présentant un rendement présentant une valeur nominale de 80% en fonctionnement normal (sans givre), si la moyenne M entre la température d'air froid préchauffé et la température d'air chaud sortant est fixée à 0,025°C, alors il est nécessaire de préchauffer le flux d'air froid entrant à une température de -1,6°C, et la température du flux d'air chaud sortant serait de 1,72°C.

Selon cet exemple, il n'y a donc pas de risque de givrage.

Par ailleurs, afin de tenir compte de la précision des mesures de température, et de l'homogénéité des températures d'air froid préchauffé et air chaud sortant, le préchauffeur 22 peut être configuré pour préchauffer le flux d'air froid F1 de sorte que la moyenne M entre la température d'air froid préchauffé, donnée par le capteur 26 de température d'air froid préchauffé, et la température d'air chaud sortant, donnée par le capteur 24 de température d'air chaud sortant, soit supérieure ou égale à 1°C ou supérieure ou égale à 2°C.

L'échangeur thermique 10 de l'invention peut être un échangeur à plaques.

Comme l'illustre les figures 2 et 3, l'échangeur thermique 10 peut également comporter un capteur 28 de température d'air chaud entrant, disposé en entrée d'air chaud (figure 2), ou un capteur 29 de température d'air froid sortant, disposé en sortie d'air froid (figure 3). Le capteur 28 de température d'air chaud entrant est disposé en amont de la surface d'échange 12, au niveau du flux d'air chaud. Le capteur 29 de température d'air froid sortant est disposé en aval de la surface d'échange 12, au niveau du flux d'air froid.

Ces capteurs permettent, dans un deuxième mode de réalisation, de calculer respectivement le rendement à l'extraction $\mu_{exhaust}$ et le rendement au soufflage $\mu_{supply}$ de l'échangeur thermique 10 en temps réel.

Le rendement à l'extraction $\mu_{exhaust}$ et le rendement au soufflage $\mu_{supply}$ de l'échangeur thermique sont calculés selon les formules précédemment présentées.

Dans la suite de la description le terme rendement signifie indifféremment rendement à l'extraction ou rendement au soufflage.

Le préchauffeur 22 est alors configuré pour préchauffer le flux d'air froid de sorte que la moyenne M entre la température d'air froid préchauffé et la température d'air chaud sortant soit inférieure ou égale à 0°C, et le rendement $\mu$ de l'échangeur calculé en temps réel soit égal à sa valeur nominale N.

De cette façon, l'échangeur thermique 10 du deuxième mode de réalisation permet d'optimiser la puissance de chauffe et donc d'économiser de l'énergie. Le préchauffage est réalisé avec un risque d'amorce de givrage, mais la surveillance du rendement permet de détecter immédiatement toute amorce de givrage et de réagir en conséquence sur le préchauffage. On parle d'auto-apprentissage.

Dans le deuxième mode de réalisation de l'invention, le préchauffeur 22 est configuré pour préchauffer le flux d'air froid de sorte que si le rendement $\mu$ est égal à sa valeur nominale N, alors le préchauffeur 22 est configuré pour préchauffer le flux d'air froid de sorte que la moyenne M entre la température d'air froid préchauffé et la température d'air chaud sortant soit inférieure ou égale à 0°C ; et si le rendement $\mu$ est inférieur à la valeur nominale N alors le préchauffeur 22 engage un cycle de surchauffe jusqu'à ce que le rendement μ retrouve sa valeur nominale N.

A noter qu'un échangeur thermique comprenant à la fois un capteur 28 de température d'air chaud entrant, disposé en entrée d'air chaud, et un capteur 29 de température d'air froid sortant, disposé en sortie d'air froid, est également possible afin de suivre le rendement de l'échangeur en temps réel.

Dans un troisième exemple de l'art antérieur, avec un flux d'air chaud présentant une température d'air chaud entrant dans l'échangeur de 25°C, et un échangeur présente un rendement présentant une valeur nominale N de 60%, alors la température du flux d'air chaud sortant serait de 7°C.

Dans ce cas, le principe de préchauffage à une température prédéterminée égale à -5°C conduit à surchauffer l'air froid sortant au-delà de ce qui est nécessaire, ce qui conduit à des surconsommations énergétiques inutiles.

En outre, avec un échangeur selon le premier mode de réalisation de l'invention, pour un flux d'air chaud présentant une température d'air chaud entrant dans l'échangeur de 25°C, et un échangeur présentant un rendement présentant une valeur nominale N de 60%, si la moyenne M entre la température d'air froid préchauffé et la température d'air chaud sortant est fixée à 0,025°C, alors il est nécessaire de préchauffer le flux d'air froid entrant à une température de -6°C, et la température du flux d'air chaud sortant serait de 6,4°C.

L'air froid sortant est surchauffé au-delà de ce qui est nécessaire, ce qui conduit à des surconsommations énergétiques.

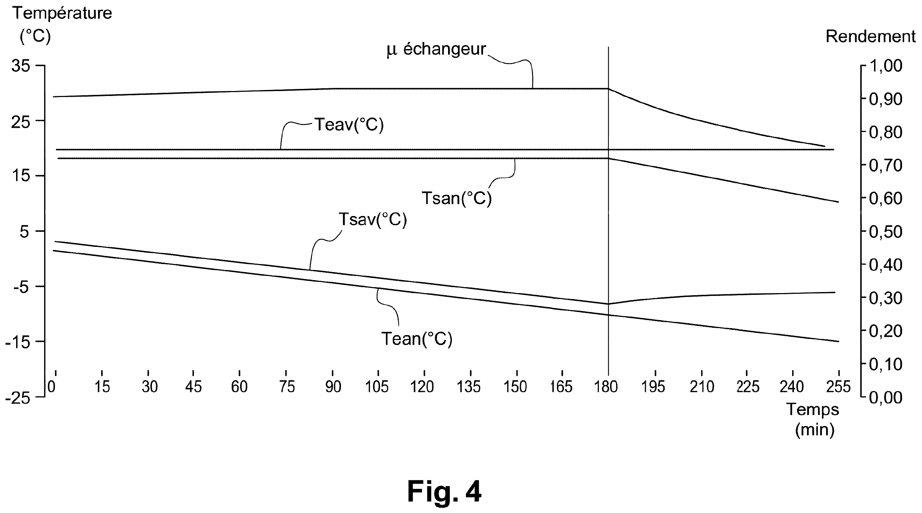

Avec un échangeur selon le deuxième mode de réalisation de l'invention, pour un flux d'air chaud présentant une température d'air chaud entrant dans l'échangeur de 25°C, et un échangeur présentant un rendement présentant une valeur nominale N de 60%, la moyenne M entre la température d'air froid préchauffé et la température d'air chaud sortant est diminuée progressivement en dessous de 0°C et le rendement μ en temps réel est calculé. A cet effet, les températures d'air froid entrant, d'air chaud entrant, d'air chaud sortant et d'air froid sortant sont suivies en temps réel par les capteurs 24, 26, 28, et 29, comme le montre la figure 4.

Lorsque la température d'air chaud sortant ne suit plus la température d'air froid entrant, cela signifie que le rendement μ en temps réel est inférieur à la valeur nominale N de 60%. Il est alors nécessaire d'engager un cycle de surchauffe jusqu'à ce que le rendement μ retrouve sa valeur nominale N.

En outre, lorsque la température d'air froid sortant chute, cela signifie que le rendement μ en temps réel est inférieur à la valeur nominale N de 60%. Il est alors nécessaire d'engager un cycle de surchauffe jusqu'à ce que le rendement μ retrouve sa valeur nominale N.

Ainsi, le préchauffeur 22 peut être configuré pour préchauffer le flux d'air froid de sorte que la moyenne M entre la température d'air froid préchauffé et la température d'air chaud sortant soit diminuée progressivement. Si le rendement μ est inférieur à la valeur nominale N alors le préchauffeur 22 engage un cycle de surchauffe jusqu'à ce que le rendement μ retrouve sa valeur nominale N.

Cela permet au préchauffeur de fonctionner avec une puissance minimum de façon à faire des économies d'énergie.

Un microcontrôleur (non représenté) permet de préchauffer le flux d'air froid F1 en fonction de la moyenne M entre la température d'air froid préchauffé et la température d'air chaud sortant, et du rendement μ en temps réel de l'échangeur thermique.

**Revendications**

1. Echangeur thermique (10) entre un flux d'air froid (F1) et un flux d'air chaud (F2) pour ventilation double flux, l'échangeur thermique (10) comprenant :

   - une surface d'échange (12) de chaleur entre le flux d'air froid (F1) et le flux d'air chaud (F2),
   - une entrée d'air froid (14) par laquelle entre le flux d'air froid (F1), en amont de la surface d'échange (12) de chaleur,
   - une sortie d'air froid (16) par laquelle sort le flux d'air froid (F1), en aval de la surface d'échange (12) de chaleur,
   - une entrée d'air chaud (18) par laquelle entre le flux d'air chaud (F2), en amont de la surface d'échange (12) de chaleur,
   - une sortie d'air chaud (20) par laquelle sort le flux d'air chaud (F2), en aval de la surface d'échange (12) de chaleur,
   - un préchauffeur (22) disposé au niveau du flux d'air froid (F1), en amont de la surface d'échange (12) de chaleur,
   - un capteur (24) de température d'air chaud sortant en aval de la surface d'échange (12) de chaleur, et
   - un capteur (26) de température d'air froid préchauffé en amont de la surface d'échange (12) de chaleur,

   le préchauffeur (22) étant configuré pour préchauffer le flux d'air froid (F1) en fonction d'une moyenne (M) entre la température d'air froid préchauffé et la température d'air chaud sortant.

2. Echangeur thermique (10) selon la revendication précédente, dans lequel le préchauffeur (22) est configuré pour préchauffer le flux d'air froid (F1) de sorte que la moyenne (M) entre la température d'air froid préchauffé et la température d'air chaud sortant soit supérieure ou égale à 0°C.

3. Echangeur thermique (10) selon l'une quelconque des revendications précédentes, dans lequel le préchauffeur (22) est configuré pour préchauffer le flux d'air froid (F1) de sorte que la moyenne (M) entre la température d'air froid préchauffé et la température d'air chaud sortant soit supérieure ou égale à 1°C, et de préférence supérieure ou égale à 2°C.

4. Echangeur thermique (10) selon la revendication 1, dans lequel l'échangeur thermique (10) présente un rendement (μ) correspondant à une valeur nominale (N) en fonctionnement normal, et comprend un capteur (28) de température d'air chaud entrant en amont de la surface d'échange (12) de chaleur et/ou un capteur (29) de température d'air froid sortant en aval de la surface d'échange (12) de chaleur, permettant de calculer le rendement (μ) en temps réel, le préchauffeur (22) étant configuré pour préchauffer le flux d'air froid (F1) de sorte que la moyenne (M) entre la température d'air froid préchauffé et la température d'air chaud sortant soit inférieure ou égale à 0°C, et le rendement (μ) en temps réel soit égal à la valeur nominale (N).

5. Echangeur thermique (10) selon la revendication 4, dans lequel si le rendement (μ) est égal à la valeur nominale (N), alors le préchauffeur (22) est configuré pour préchauffer le flux d'air froid (F1) de sorte que la moyenne (M) entre la température d'air froid préchauffé et la température d'air chaud sortant soit inférieure ou égale à 0°C ; et si le rendement (μ) est inférieur à la valeur nominale (N) alors le préchauffeur (22) engage un cycle de surchauffe jusqu'à ce que le rendement (μ) retrouve sa valeur nominale (N).

6. Echangeur thermique (10) selon l'une quelconque des revendications 4 et 5, dans lequel le préchauffeur (22) est configuré pour préchauffer le flux d'air froid (F1) de sorte que la moyenne (M) entre la température d'air froid préchauffé et la température d'air chaud sortant soit diminuée progressivement.

7. Echangeur thermique (10) selon l'une quelconque des revendications précédentes, dans lequel l'échangeur thermique (10) est un échangeur à plaques.

8. Echangeur thermique (10) selon l'une quelconque des revendications précédentes, comprenant un microcontrôleur configuré pour piloter le préchauffeur (22).

9. Procédé de mise en œuvre d'un échangeur thermique selon l'une quelconque des revendications précédentes, comprenant les étapes suivantes :

- Calcul de la moyenne (M) entre la température d'air froid préchauffé et la température d'air chaud sortant,
- Pilotage du préchauffeur (22) en fonction de la moyenne (M) calculée lors de l'étape précédente.

10. Procédé selon la revendication précédente, comprenant en outre l'étape suivante :

- Calcul du rendement (μ) en temps réel.

**Patentansprüche**

1. Wärmetauscher (10) zwischen einem Kaltluftstrom (F1) und einem Warmluftstrom (F2) für eine Belüftung mit doppeltem Luftstrom, wobei der Wärmetauscher (10) Folgendes umfasst:

- eine Wärmeaustauschfläche (12) zwischen dem Kaltluftstrom (F1) und dem Warmluftstrom (F2),
- einen Kaltlufteinlass (14), durch den der Kaltluftstrom (F1) vor der Wärmeaustauschfläche (12) eintritt,
- einen Kaltluftauslass (16), durch den der Kaltluftstrom (F1) nach der Wärmeaustauschfläche (12) austritt,
- einen Warmlufteinlass (18), durch den der Warmluftstrom (F2) vor der Wärmeaustauschfläche (12) eintritt,
- einen Warmluftauslass (20), durch den der Warmluftstrom (F2) nach der Wärmeaustauschfläche (12) austritt,
- einen Vorwärmer (22), der auf Höhe des Kaltluftstroms (F1) vor der Wärmeaustauschfläche (12) angeordnet ist,
- einen Temperatursensor (24) für die nach der Wärmeaustauschfläche (12) austretende Warmluft, und
- einen Temperatursensor (26) für die vor der Wärmeaustauschfläche (12) vorgewärmte Kaltluft,

wobei der Vorwärmer (22) so eingerichtet ist, dass er den Kaltluftstrom (F1) in Abhängigkeit von einem Mittelwert (M) zwischen der Temperatur der vorgewärmten Kaltluft und der Temperatur der austretenden Warmluft vorwärmt.

2. Wärmetauscher (10) nach dem vorhergehenden Anspruch, wobei der Vorwärmer (22) so eingerichtet ist, dass er den Kaltluftstrom (F1) vorwärmt, sodass der Mittelwert (M) zwischen der Temperatur der vorgewärmten Kaltluft und der Temperatur der austretenden Warmluft größer oder gleich 0 °C ist.

3. Wärmetauscher (10) nach einem der vorhergehenden Ansprüche, wobei der Vorwärmer (22) so eingerichtet ist, dass er den Kaltluftstrom (F1) vorwärmt, sodass der Mittelwert (M) zwischen der Temperatur der vorgewärmten Kaltluft und der Temperatur der austretenden Warmluft größer oder gleich 1 °C und vorzugsweise größer oder gleich 2 °C ist.

4. Wärmetauscher (10) nach Anspruch 1, wobei der Wärmetauscher (10) einen Wirkungsgrad ($\mu$) aufweist, der einem Nennwert (N) im Normalbetrieb entspricht, und einen Temperatursensor (28) für die vor der Wärmeaustauschfläche (12) eintretende Warmluft und/oder einen Temperatursensor (29) für die nach der Wärmeaustauschfläche (12) austretende Kaltluft umfasst, des es ermöglichen, den Wirkungsgrad ($\mu$) in Echtzeit zu berechnen, wobei der Vorwärmer (22) so eingerichtet ist, dass er den Kaltluftstrom (F1) vorwärmt, sodass der Mittelwert (M) zwischen der Temperatur der vorgewärmten Kaltluft und der Temperatur der austretenden Warmluft kleiner oder gleich 0 °C ist und der Wirkungsgrad ($\mu$) in Echtzeit gleich dem Nennwert (N) ist.

5. Wärmetauscher (10) nach Anspruch 4, wobei, wenn der Wirkungsgrad ($\mu$) gleich dem Nennwert (N) ist, dann der Vorwärmer (22) so eingerichtet ist, dass er den Kaltluftstrom (F1) vorwärmt, sodass der Mittelwert (M) zwischen der Temperatur der vorgewärmten Kaltluft und der Temperatur der austretenden Warmluft kleiner oder gleich 0 °C ist; und wenn der Wirkungsgrad ($\mu$) kleiner als der Nennwert (N) ist, der Vorwärmer (22) dann einen Überhitzungszyklus einleitet, bis der Wirkungsgrad ($\mu$) wieder seinen Nennwert (N) erreicht hat.

6. Wärmetauscher (10) nach einem der Ansprüche 4 und 5, wobei der Vorwärmer (22) so eingerichtet ist, dass er den Kaltluftstrom (F1) vorwärmt, sodass der Mittelwert (M) zwischen der Temperatur der vorgewärmten Kaltluft und der Temperatur der austretenden Warmluft allmählich verringert wird.

7. Wärmetauscher (10) nach einem der vorhergehenden Ansprüche, wobei der Wärmetauscher (10) ein Plattenwärmetauscher ist.

8. Wärmetauscher (10) nach einem der vorhergehenden Ansprüche, der einen Mikrocontroller umfasst, der so eingerichtet ist, dass er den Vorwärmer (22) steuert.

9. Verfahren zum Betreiben eines Wärmetauschers nach einem der vorhergehenden Ansprüche, umfassend die folgenden Schritte:

- Berechnen des Mittelwerts (M) zwischen der Temperatur der vorgewärmten Kaltluft und der Temperatur der austretenden Warmluft,
- Steuern des Vorwärmers (22) in Abhängigkeit vom im vorherigen Schritt berechneten Mittelwert (M).

10. Verfahren nach dem vorhergehenden Anspruch, ferner umfassend den folgenden Schritt:

- Berechnen des Wirkungsgrads ($\mu$) in Echtzeit.

## Claims

1. A heat exchanger (10) between a cold air flow (F1) and a warm air flow (F2) for dual-flow ventilation system, the heat exchanger (10) comprising:

- a heat exchange surface (12) between the cold air flow (F1) and the warm air flow (F2),
- a cold air inlet (14) through which the cold air flow (F1) enters, upstream of the heat exchange surface (12),
- a cold air outlet (16) through which the cold air flow (F1) exits, downstream of the heat exchange surface (12),
- a warm air inlet (18) through which the warm air flow (F2) enters, upstream of the heat exchange surface (12),
- a warm air outlet (20) through which the warm air flow (F2) exits, downstream of the heat exchange surface (12),
- a preheater (22) disposed at the cold air flow (F1), upstream of the heat exchange surface (12),
- a warm air outlet temperature sensor (24) downstream of the heat exchange surface (12), and
- a preheated cold air temperature sensor (26) upstream of the heat exchange surface (12),

the preheater (22) being configured to preheat the cold air flow (F1) based on an average (M) between the preheated cold air temperature and the warm air outlet temperature.

2. The heat exchanger (10) according to the preceding claim, wherein the preheater (22) is configured to preheat the cold air flow (F1) such that the average (M) between the preheated cold air temperature and the warm air outlet temperature is greater than or equal to 0°C.

3. The heat exchanger (10) according to any one of the preceding claims, wherein the preheater (22) is configured to preheat the cold air flow (F1) such that the average (M) between the preheated cold air temperature and the warm air outlet temperature is greater than or equal to 1°C, and preferably greater than or equal to 2°C.

**4.** The heat exchanger (10) according to claim 1, wherein the heat exchanger (10) has an efficiency ($\mu$) corresponding to a nominal value (N) under normal operation, and comprises a warm air inlet temperature sensor (28) upstream of the heat exchange surface (12) and/or a cold air outlet temperature sensor (29) downstream of the heat exchange surface (12), enabling the calculation of the efficiency ($\mu$) in real time, the preheater (22) being configured to preheat the cold air flow (F1) such that the average (M) between the preheated cold air temperature and the warm air outlet temperature is less than or equal to 0°C, and the efficiency ($\mu$) in real time is equal to the nominal value (N).

**5.** The heat exchanger (10) according to claim 4, wherein if the efficiency ($\mu$) is equal to the nominal value (N), then the preheater (22) is configured to preheat the cold air flow (F1) such that the average (M) between the preheated cold air temperature and the warm air outlet temperature is less than or equal to 0°C; and if the efficiency ($\mu$) is lower than the nominal value (N), then the preheater (22) initiates an overheating cycle until the efficiency ($\mu$) returns to its nominal value (N).

**6.** The heat exchanger (10) according to any one of claims 4 and 5, wherein the preheater (22) is configured to preheat the cold air flow (F1) such that the average (M) between the preheated cold air temperature and the warm air outlet temperature is gradually decreased.

**7.** The heat exchanger (10) according to any one of the preceding claims, wherein the heat exchanger (10) is a plate heat exchanger.

**8.** The heat exchanger (10) according to any one of the preceding claims, comprising a microcontroller configured to control the preheater (22).

**9.** A method for implementing a heat exchanger according to any one of the preceding claims, comprising the following steps:

- calculating the average (M) between the preheated cold air temperature and the warm air outlet temperature,
- controlling the preheater (22) based on the average (M) calculated in the previous step.

**10.** The method according to the preceding claim, further comprising the following step:

- calculating the efficiency ($\mu$) in real time.

# Fig. 1

# Fig. 2

# Fig. 3

**Fig. 4**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2444755 A2
- GB 2559692 A